# EUROPEAN PATENT SPECIFICATION

(11) **EP 3 699 201 B1**
(45) Date of publication and mention of the grant of the patent: **09.06.2021**
(21) Application number: 20158294.7
(22) Date of filing: 19.02.2020
(51) Int. Cl.: C08B 15/06, C08B 1/00, C08B 16/00, C08L 1/08

(54) **PROCESS FOR THE PREPARATION OF CELLULOSE CARBAMATE**
VERFAHREN ZUR HERSTELLUNG VON CELLULOSECARBAMAT
PROCÉDÉ DE PRÉPARATION DE CARBAMATE DE CELLULOSE

(30) Priority: 20.02.2019 IT 201900002479
(43) Date of publication of application: 26.08.2020
(73) Proprietor: Montefibre Mae Technologies S.R.L., 20145 Milan (IT); Thüringisches Institut für Textil- und Kunststoff-Forschung e.V., 07407 Rudolstadt (DE)
(72) Inventor: FRANCALANCI, Franco, I-28100 NOVARA (IT); MARINETTI, Massimo, I-30172 Mestre (VE) (IT); BELLARDI, Luca, I-26100 CREMONA (IT); NIEMZ, Frank-Günter, 07407 Rudolstadt (DE); SCHALLER, Jens, 99510 Apolda, OT Herressen (DE); KOSAN, Birgit, 07407 Rudolstadt (DE)
(74) Representative: De Gregori, Antonella

(56) References cited:
- WO-A1-83/03433
- WO-A1-2015/198218
- GB-A- 2 131 436
- US-A- 2 811 497
- US-A- 5 831 076
- TENG YUN ET AL: "The preparation and study of regenerated cellulose fibers by cellulose carbamate pathway", INTERNATIONAL JOURNAL OF BIOLOGICAL MACROMOLECULES, vol. 107, 4 September 2017 (2017-09-04), pages 383-392, XP085319775, ISSN: 0141-8130, DOI: 10.1016/J.IJBIOMAC.2017.09.006

## Description

The present invention relates to a process for the preparation of cellulose derivatives.

In the field of industrial processes aimed at obtaining threads, fibers, films such as cellulose products, there is great interest in obtaining a cellulose derivative soluble in sodium hydroxide solutions. Among the most well-known industrial processes for transforming cellulose into articles such as fibers or films, there is the "viscose production process". This process necessarily requires an intermediate step wherein the cellulose is reacted with carbon disulfide to form cellulose xanthogenate, soluble in alkaline aqueous solutions, such as in caustic soda. In this reaction, some chemical groups present in the cellulose react with the carbon disulfide, forming a cellulose derivative soluble in said solvents.

From this type of solution specifically called "viscose", through a regeneration process that generally takes place by extruding the solution in an acid coagulation or salt bath, cellulose is then obtained again in various forms, for example in the form of fibers (viscose fibers, Rayon, etc.) or in film form (cellophane).

The xanthogenate process, using an intermediate such as carbon disulfide, a substance with extremely dangerous characteristics for both human beings and the environment, is currently the subject of considerable criticism due to the inevitable emissions of sulfides and other polluting by-products, consequently resulting in a process with a high environmental impact.

These problems seem to limit, if not even prevent, the creation of further new settlements of cellulose-fiber production plants, based on the xanthogenate process.

As the problem is particularly felt due to the fact that cellulose fiber is extremely appreciated by the market, many attempts have been made for finding a solution. Despite numerous attempts for identifying alternative technologies to the viscose process, however, currently the only industrially feasible alternative is the spinning of cellulose by direct dissolution of the raw material in particular solvents (for example NMMO, i.e. N-methyl-morpholine-oxide) .

This alternative route, however, is not equivalent, in terms of quality of the final product, to the xanthogenate process and, in fact, is not totally appreciated by the market, specifically because the quality characteristics of the final product do not reach those of the product obtained through the xanthogenate process.

Attempts for producing and using cellulose carbamate are also known in literature. The reaction of cellulose with urea, in fact, when properly carried out, leads to the substitution of some substituting groups of cellulose, more specifically some hydroxyl groups with nitrogen-containing groups called "carbamates". Cellulose carbamate, under certain conditions, can also be soluble in solvents such as sodium hydroxide solutions.

Similarly to what is described above for cellulose xanthogenate, cellulose carbamate solutions in caustic soda are also capable of giving "viscose" and being subsequently transformed through a regeneration process in an acid coagulation or salt bath, obtaining articles such as threads, fibers or films, exactly like the viscose from cellulose xanthogenate.

As indicated, various attempts are known, also described in patent literature, in which production processes based on cellulose carbamate and the following methods for transforming cellulose carbamate solutions into manufactured articles are described; at present, however, these attempts have not passed the experimental stage and found an industrial application.

US patent 2,134,825, for example, claims the possibility of producing cellulose carbamate in different ways; all the processes described in US '825, however, can lead back to a few simple steps: absorbing a solution of urea in cellulose, drying the cellulose and dry-reacting it in the oven at temperatures higher than 130°C.

Other processes have suggested the use of solvents such as liquid ammonia (US 4,567,225) or reactions carried out in aromatic organic solvents (US 5,378,827). In US 5,831,076 it is disclosed for example a process for the preparation of cellulose carbamate comprising the step of reacting urea and cellulose in an inert liquid organic carrier, e.g. toluene. Although these processes can lead to the desired product, i.e. to obtain cellulose carbamate, they are difficult to implement on an industrial level. Production processes, reported in scientific literature, which use reactions carried out in organic solvents or through energy sources such as microwaves, are also difficult to implement industrially.
The principle on which the formation of cellulose carbamate is based is the reaction between urea and cellulose, even if this reaction is not actually a direct reaction. The reaction in fact seems to pass through a reaction intermediate that arises as a result of the thermal decomposition of urea. This intermediate, which is assumed to be isocyanic acid, is formed by thermolysis of urea through the reaction 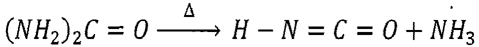 Thermal decomposition starts at temperatures higher than 130-140°C, the isocyanic acid thus produced reacts with the hydroxyls of the cellulose, giving cellulose carbamate and eliminating an ammonia molecule

*Cell.* +*n*[*H* - *N* = *C* = *O*] →*Cell. -*[*O* - *C* = *O* - *NH*₂]*ₙ* + *nNH*₃

The isocyanic acid molecule is extremely reactive and can react rapidly even with other substances; among these, isocyanic acid reacts very quickly with water and the reaction between water and isocyanic acid leads to carbon dioxide and ammonia

*H - N* = *C* = *O + H₂O* → *NH*₃ + *CO*₂

It is therefore important that the carbamation reaction of cellulose take place in an anhydrous environment or with very little water in order not to lose part of the reagent as by-product. The substitution reaction of the -OH group does not necessarily have to be carried out until the complete substitution of all the hydroxyl groups of the cellulose; a maximum of 3 hydroxyl units can in fact be substituted in each glucoside group of cellulose (degree of substitution = 3), but in order to make the cellulose carbamate soluble in alkalis, a substitution degree of 0.2-0.3 is sufficient, i.e. at least one hydroxyl group must be substituted with the carbamate every three or four glucose units of cellulose.

The preparation process of cellulose carbamate must provide as a first condition the possibility for the urea to reach the functional groups of cellulose. The reaction therefore initially takes place in a heterogeneous phase where the urea is dissolved in a suitable medium and absorbed into the cellulose pulp. According to the previously mentioned prior art, the medium can be simply water or an organic solvent that can carry urea. Optionally, an agent can also be added that can make the cellulose pulp more permeable to urea, such as, for example, a strong base capable of swelling the cellulose fibers.

Using aqueous solutions, however, once the urea has been absorbed into the fiber, the water must be completely removed by drying the urea-soaked fiber. An alternative route to the process with water that involves drying the fiber, is to replace the water with an organic solvent capable of dissolving the urea, absorbing it into the cellulose and also suitable for conducting the subsequent reaction to give the carbamate.

As indicated above, processes of this type are described in literature which however use solvents which are not suitable for thermal stability or chemical reactivity and which above all do not solve the environmental problems that make the xanthogenate process that uses carbon disulfide critical.

After the reaction with urea, in fact, washing and removal phases of organic solvents are necessary which make the processes less convenient and above all have a high impact from an environmental point of view.

The objective of the present invention is therefore to identify a process for the preparation of cellulose carbamate which overcomes the drawbacks of the processes of the state of the art.

### Detailed description of the invention

An object of the present invention therefore relates to a process for the preparation of cellulose carbamate wherein the reaction between urea and cellulose is carried out in a solvent selected from molten dimethylsulfone or a mixture of dimethylsulfone and water.

The process according to the present invention preferably comprises or consists in the following steps:
i) preparing a solution of urea in molten DMSO₂ (dimethylsulfone or methyl sulfonylmethane) ;
ii) dispersing the cellulose in the solution of urea/molten DMSO₂ (melting point 109°C);
iii) keeping the suspension thus obtained under stirring at a temperature of 109-112°C for a time ranging from 5 to 60 minutes;
iv) heating the suspension to a temperature ranging from 130 to 170°C, for a time ranging from 60 to 300 minutes;
v) filtering the solution thus obtained and washing the residue with molten DMSO₂ to remove and recover the unreacted urea;
vi) removing the residual solvent.

Alternatively, the process according to the present invention comprises or consists in the following steps:
i) preparing a solution of urea in a mixture of DMSO₂/water;
ii) dispersing the cellulose in the urea/DMSO₂/water solution;
iii) keeping the suspension thus obtained under stirring for a period of time ranging from 5 to 60 minutes at a temperature ranging from 20 to 100°C and subsequently heating the suspension thus obtained to a temperature ranging from 100 to 120°C, for a time sufficient for the complete removal of the water present in the mixture;
iv) heating the suspension coming from step iii) to a temperature ranging from 130°C to 170°C, for a time ranging from 60 to 300 minutes;
v) filtering the solution thus obtained and washing the residue with molten DMSO₂ to remove and recover the unreacted urea;
vi) removing the residual solvent.

It is also disclosed a process for the preparation of a homogeneous spinning solution for the production of cellulosic articles, preferably cellulose fibers starting from the cellulose carbamate that can be obtained with the process according to the present invention.

In step iv) the ammonia which is formed as reaction by-product is removed.

In step vi) of the process according to the present invention the residual solvent left on the cellulose can be removed by washing or by sublimation of the DMSO₂ solvent.

The carbamate process is extremely convenient and interesting considering the use of an intermediate reagent such as urea, almost totally free of toxicity and which consequently does not create environmental problems, and therefore from this point of view, it is absolutely superior to carbon disulfide.

Furthermore, a further advantage of the carbamate process is that it can be carried out, from an industrial point of view, by completely eliminating some sections of the plants currently used for conducting the xanthogenate process, i.e. which uses carbon disulfide and re-using almost all of the remaining structures.

The transition from the xanthogenate process to the carbamate process can therefore be achieved by eliminating part of the existing plant, replacing only a small part of the production plants and keeping a relevant part of the existing plant, such as the spinning part, practically intact and unchanged.

The choice of DMSO₂ as solvent for the carbamation reaction where the cellulose is kept in suspension and the reaction takes place in a heterogeneous phase, is particularly advantageous, as this solvent guarantees at the same time thermal stability, inertia from a chemical point of view, is a good solvent for urea and is absolutely eco-friendly.

Dimethyl sulfone or DMSO₂ in fact, belongs to the family of organic compounds deriving from sulfur; in particular it falls within the family of sulfones R₁-SO₂-R₂ which are generally extremely stable and low-toxic compounds; some are used as solvents in the oil industry (sulfolane or tetramethylene sulfone), others, which are rarer, are used in the electronics industry.

Dimethyl sulfone, among the simplest and most common sulfones, is a compound which is solid at room temperature, has excellent polar, aprotic solvent characteristics, is solid at room temperature, with a melting point slightly over 100°C, it is easily soluble in water; it is practically inert from a chemical point of view having an extremely high thermal stability, such as to be suggested even as a diathermic fluid. It is a molecule that is formed naturally in the metabolism of living organisms and does not show any harmful characteristics for human beings or the environment. DMSO₂, also known as Methylsulfonylmethane, has long been used as a food supplement (it is described as a source of organic sulfur) for human beings and animals and is available on the market at an industrial level.

It can be easily recovered by distillation or re-crystallization and also has the particular characteristic of easily sublimating and therefore of being able to be eliminated from the reaction environment using this property.

Consequently, it does not even have the disadvantage associated with the need for being removed by washing with water which requires the use of large quantities of water and expensive drying processes of the cellulose.

The sublimation of DMSO₂ can be quite advantageous, in fact, if the solvent is to be rapidly removed from the reaction environment.

The preparation process of cellulose carbamate according to the present invention can be described in greater detail as follows.

The first step i) consists in the preparation of a solution of urea in pure molten dimethylsulfone at a temperature higher than 110°C, or the preparation of a solution of urea in a mixture of DMSO₂ and water, when a reaction environment comprising water is preferable. This reaction environment is preferable when the water makes it possible to operate under particular conditions useful for the process itself such as: using cellulose subjected to certain pre-treatment, imbibitions in the cellulose of water-soluble substances, etc.

The DMSO₂/water mixture comprises DMSO₂ and water in a ratio ranging from 5 to 40% by weight of water.

In the subsequent step ii), the cellulose is added to the urea solution in DMSO₂ or in DMSO₂/water thus prepared, forming a suspension.

In step iii), the cellulose is kept under stirring in suspension in the urea solution in DMSO₂ or DMSO₂/ water and imbibed by the solution itself for a time ranging from 5 to 60 minutes. The cellulose is thus impregnated with urea. Thanks to the capacity of the solution of slightly swelling the cellulose, the urea reagent also reaches the inside of the matrix of the cellulose fibers.

An important parameter in this process is represented by the characteristics of the cellulose to be subjected to the reaction with urea. Different types of cellulose can in fact behave differently in terms of reaction times, solubility of the product after reaction with urea and stability of the viscose obtainable in the aqueous soda solutions.

It is preferable to use a cellulose with a low or medium-low molecular weight, i.e. with a polymerization degree values ranging from DP 200 to DP 700. The degree of polymerization is the number of repetitive units present in the structure of a polymer. The degree of polymerization x of a homopolymer is equal to the ratio between the molecular weight of the polymer and the molecular weight of the single repetitive units of which it is formed and according to ASTM D1795 DP is a pure number whose well-approximated value can be obtained from the intrinsic viscosity value [η]dl/g x solute concentration g/dl x 190) or by applying the equation [η]=6.8x10³ (DP)^{0.9}.

Celluloses of this type are generally cellulose pulps or cotton linters which can derive from mercerization treatments, refining with alkalis or enzymatic treatments which tend to decrease the molecular weight of the native cellulose, which is generally higher.

Different cellulose degradation treatments, for example with peroxides or with other compounds, can also be used for reducing the molecular weight of the cellulose; these processes can be carried out separately on the cellulose pulp for obtaining a raw material with the desired characteristics or by carrying out this reaction for reducing the molecular weight of the cellulose, immediately before, perhaps in the same reaction medium, the reaction with urea to give the carbamate.

The concentration of urea in the solvent can vary from 5 to 40% by weight with respect to the total weight of the solution, whereas the solution/cellulose weight ratio ranges from 5 to 20.

In this step iii), the solution thus obtained is kept under stirring at a temperature of 109-112°C, i.e. at a temperature slightly higher than the melting point of DMSO₂ when conducted on the pure solvent
at a temperature of 60 to 120°C when the reaction is carried out in a mixture of DMSO₂/water,
in order to facilitate the penetration of urea in the cellulose and this penetration is optimal in a time ranging from 5 to 60 minutes.

When the reaction is carried out in the presence of water, the heating to a compressed temperature ranging from 100 to 120 ° C is further maintained until the complete distillation of the water present in the mixture.

Having thus obtained a practically anhydrous solution of urea in dimethylsulfone, step iv) is carried out, wherein the carbamation reaction takes place, raising the temperature of the mixture to the desired reaction temperature (130°C-170°C) and maintaining this temperature for a time preferably ranging from 60 to 300 minutes. A slight flow of inert gas can remove the ammonia formed in the reaction, thus thermodynamically shifting the balance. This reaction by-product is suitably eliminated or recovered.

At the end of the reaction, in step v), the solution of dimethylsulfone and urea is filtered and the residue is treated with pure dimethylsulfone to wash the cellulose carbamate from the unreacted urea and eliminate any by-products of the reaction.

In the last step vi), the residual solid, after filtration of the solvent, is treated with a flow of hot air or inert gas to remove and recover the residual solvent, i.e. DMSO₂, thanks to its capacity of sublimating, leaving the cellulose carbamate absolutely clean.

It is also possible to carry out further washings of the cellulose carbamate with solvents or water in order to remove any possible further reaction by-products.

The cellulose carbamate thus obtained can be successfully dissolved in aqueous solutions, mainly in aqueous solutions consisting of NaOH, having a concentration in NaOH which ranges from 4% to 10% by weight.

Other components (organic additives, zinc oxide, etc.) can be added to these NaOH solutions in order to optimize the solubility of the cellulose carbamate and regulate the rheology of the viscose.

The viscose solutions containing a quantity of cellulose carbamate ranging from 4 to 10% by weight showed viscosities ranging from 8 to 150 Poise, measured at room temperature with a Haake Viscotester IQ rotational rheometer with coaxial cylinder/rotor system (the rotor geometry is called DIN53019 / ISO 3219 CC25 DIN).

This viscose can then be used directly in the subsequent cellulose regeneration steps which generally take place by extruding the viscose solution in an acid coagulation or salt bath, thus obtaining cellulose again in various forms, for example in the form of fibers (viscose fibers, Rayon, etc.) or in the form of a film (cellophane).

### Examples.

Some implementation examples of the process according to the present invention are provided hereunder, by way of non-limiting example of the present invention.

### Example 1

200 g of DMSO₂ in powder form were introduced into a 1 litre steel reactor equipped with a heating jacket, anchor stirrer and condenser for the recovery of the solvent.

The temperature of the reactor was brought to about 110-115°C and the DMSO₂, on melting, was in liquid form.

80 grams of urea beads were then added, which were dissolved in DMSO₂ under gentle stirring. 20 grams of cellulose pulp from cotton linter "dissolving pulp" ground into flakes (DP = 460) were then added to this solution, and the temperature of the reactor was brought to 160°C.

A slight flow of inert gas was then maintained for removing the ammonia formed in the reaction. The flow was not such as to remove the sulfone which tends to sublimate, in any case the solvent possibly removed, was retained by the condenser which caused it to fall back into the reactor.

The cellulose suspension in the DMSO₂/urea solution was maintained at the temperature indicated for 3.5 hours, then quickly hot filtered on a fine mesh metal filter and washed with molten solvent (DMSO₂).

The solvent-impregnated fiber cake was transferred to a perforated basket, introduced into a cylinder flushed with air at 130°C, where the DMSO₂ easily sublimated, was removed and subsequently condensed and recovered.

After a few minutes the DMSO₂ was totally removed.

21.3 g of a light hazelnut-coloured cellulose carbamate pulp were thus obtained.

10 g of cellulose thus modified were dissolved in 190 g of a solution of NaOH at 9% by weight; on cooling the suspension (-12°C), the cellulose carbamate solubilizes. The viscose produced in this way shows, at room temperature (25°C), a viscosity close to 95 poise measured with a Haake Viscotester IQ rotational viscometer.

### Example 2

60 g of water and 200 g of DMSO₂ in powder form were introduced into a 1 litre steel reactor equipped with a heating jacket, anchor stirrer and condenser, promptly obtaining a clear solution.

The solution was brought to 50°C and 80 grams of urea were added and dissolved. 20 g of ground cellulose (dissolving pulp - Fiber Type, enzymatically activated with a final DP of 390 after treatment) were then added to this solution.

The suspension was kept under stirring at 65°C for one hour and the temperature of the jacket was then increased, thus stabilizing the temperature of the suspension slightly higher than 100°C. The water was removed by means of an inert gas flow passing through the suspension, which, condensed, was diverted out of the system.

At the end of the evaporation of the water, the temperature was kept at about 120-125°C for about 15 minutes, to ensure the complete dehydration of the solution. In order not to remove the DMSO₂, the flow of inert gas was reduced and the temperature was raised to about 155-160°C; the slight flow of inert gas allowed the removal of the reaction by-products (ammonia). The temperature was then maintained for four hours, under constant light stirring.

The contents of the reactor were then poured into cold water and the cellulose carbamate recovered by filtration.

After washing with water and drying in an oven at 45°C, 20.5 grams of cellulose carbamate were obtained. 10 g of this cellulose carbamate were dissolved in 190 ml of cold solution (-12°C) of NaOH at 9% by weight, obtaining a viscose solution having a viscosity of approximately 84 poise, measured at 25°C with a Haake Viscotester IQ rotational viscometer.

### Example 3

50 g of a cellulose cake (sulfite pulp - DP 700) were impregnated with 1 litre of a 19% NaOH solution at room temperature for two hours, under light stirring: the pulp was then filtered and wrung to remove the maximum possible amount of liquid.

The cellulose was thus opened in small flakes and was kept in a large open container for 24 hours.

40 g of cellulose thus treated containing about 50% of water were dispersed in 250 g of melted DMSO₂ and 90 g of urea were then added.

The suspension was kept at a temperature of 115°C for 90 minutes with total removal of the water and the temperature was then increased to 165°C and maintained for 3 hours, under light stirring. A slight flow of inert gas (nitrogen) was then maintained to remove the ammonia formed in the reaction. The flow was not such as to remove the sulfone which tends to sublimate, in any case the solvent possibly removed was retained by the condenser which caused it to fall back into the reactor.

The suspension was rapidly hot filtered on a fine mesh metal filter and washed with fresh and wrung molten solvent (DMSO₂).

The solvent-impregnated fiber cake was transferred to a perforated basket, introduced into a cylinder flushed with air at 120°C, where the DMSO₂ easily sublimated, was removed and subsequently condensed and recovered.

After a few minutes the DMSO₂ was totally removed. The dark hazelnut-coloured cellulose thus treated was washed in water to remove the excess of reagents left on the fiber, then dried in an oven at 60°C, obtaining 20.8 g of product.

10 g of the product thus obtained consisting of cellulose carbamate were added under stirring to 190 g of a solution of sodium hydroxide at 9% by weight at room temperature. This cellulose carbamate solution was cooled to -12°C under continuous stirring, obtaining a transparent viscose solution.

The viscose thus produced is characterized at room temperature (25°C) by a viscosity of about 110 Poise measured with a Haake Viscotester IQ rotational viscometer.

### Example 4

100 grams of cellulose (DP = 300) were dispersed in a solution of 2,000 g of molten DMSO₂ and 900 g of urea. This suspension was kept at 120°C for 1 hour under stirring so as to permeate the urea inside the cellulose itself, keeping the reactor under constant stirring. The temperature was subsequently increased to 150°C for 3.5-4 hours under continuous stirring. The suspension was then filtered on a buchner and placed in the oven at 65°C for 1-2 hours to dry. 20 g of the product thus obtained, consisting of cellulose carbamate, were added under stirring to 286 g of a 9% solution of sodium hydroxide at room temperature. This cellulose carbamate solution was cooled to - 11-12°C under vigorous and continuous stirring for 5 minutes, obtaining a transparent solution having a viscosity of 8 Poise at 20°C measured with a Haake Viscotester IQ rotational viscometer.

## Claims

1. A process for the preparation of cellulose carbamate wherein the reaction between urea and cellulose is carried out in a solvent selected from molten dimethylsulfone and a mixture of dimethylsulfone and water.

2. The process according to claim 1, which comprises or consists in the following steps:
i) preparing a solution of urea in molten DMSO₂ (dimethylsulfone or methyl sulfonylmethane) ;
ii) dispersing the cellulose in the solution of urea/molten DMSO₂ (melting point 109°C);
iii) keeping the suspension thus obtained under stirring at a temperature of 109-112°C for a time ranging from 5 to 60 minutes;
iv) heating the suspension to a temperature ranging from 130 to 170°C, for a time ranging from 60 to 300 minutes;
v) filtering the solution thus obtained and washing the residue with molten DMSO₂ to remove and recover the unreacted urea;
vi) removing the residual solvent.

3. The process according to claim 1, which comprises or consists in the following steps:
i) preparing a solution of urea in a mixture of DMSO₂/water;
ii) dispersing the cellulose in the urea/DMSO₂/water solution;
iii) keeping the suspension thus obtained under stirring for a period of time ranging from 5 to 60 minutes at a temperature ranging from 20 to 100°C and subsequently heating the suspension thus obtained to a temperature ranging from 100 to 120°C, for a time sufficient for the complete removal of the water present in the mixture;
iv) heating the suspension coming from step iii) to a temperature ranging from 130°C to 170°C, for a time ranging from 60 to 300 minutes;
v) filtering the solution thus obtained and washing the residue with molten DMSO₂ to remove and recover the unreacted urea;
vi) removing the residual solvent.

4. The process according to any of the previous claims, wherein during step iv), the ammonia which is formed as reaction by-product is removed.

5. The process according to any of the previous claims, wherein during step vi) the residual solvent remaining on the cellulose is removed by washing or by sublimation of the DMSO₂ solvent.

6. The process according to any of the previous claims, wherein the DMSO₂/water mixture comprises DMSO₂ and water in a ratio ranging from 5 to 40% by weight of water.

7. The process according to any of the previous claims, wherein the cellulose has a polymerization degree ranging from DP 200 to DP700.

8. The process according to any of the previous claims, wherein the concentration of urea in the solvent ranges from 5 to 40% by weight with respect to the total weight of the solution.

9. The process according to any of the previous claims, wherein the solution/cellulose weight ratio in step ii) ranges from 5 to 20.

## Patentansprüche

1. Verfahren zur Herstellung von Zellulosecarbamat, wobei die Reaktion zwischen Harnstoff und Zellulose in einem Lösungsmittel, ausgewählt aus geschmolzenem Dimethylsulfon und einem Gemisch aus Dimethylsulfon und Wasser, durchgeführt wird.

2. Verfahren nach Anspruch 1, das die folgenden Schritte umfasst oder daraus besteht:
i) Herstellung einer Lösung von Harnstoff im geschmolzenem DMSO₂ (dimethylsulfone oder methyl-sulfonylmethan);
ii) Dispergieren der Zellulose in der Lösung von Harnstoff/geschmolzenem DMSO₂ (Schmelzpunkt 109°C);
iii) Halten der so erhaltenen Suspension unter Rühren auf einer Temperatur von 109-112° für eine Zeit vom 5 bis 60 Minuten;
iv) Erhitzen der Suspension auf eine Temperatur im Bereich von 130 bis 170°C für eine Zeit von 60 bis 300 Minuten;
v) Filtrieren der so erhaltenen Lösung und Waschen des Rückstandes mit geschmolzenem DMSO₂ zur Entfernung und Rückgewinnung des Harnstoffs, der nicht reagiert hat;
vi) Entfernen des restlichen Lösungsmittels.

3. Verfahren nach Anspruch 1, das die folgenden Schritte umfasst oder daraus besteht:
i) Herstellung einer Lösung von Harnstoff in einer Mischung aus DMSO₂/Wasser;
ii) Dispergieren der Zellulose in der Lösung von Harnstoff/DMSO₂/Wasser;
iii) Halten der so erhaltenen Suspension unter Rühren für einen Zeitraum von 5 bis 60 Minuten bei einer Temperatur im Bereich von 20 bis 100°C und anschließendes Erhitzen der so erhaltenen Suspension auf eine Temperatur im Bereich von 100 bis 120°C für eine Zeit, die für die vollständige Entfernung des in der Mischung vorhandenen Wassers ausreicht;
iv) Erhitzen der aus Schritt iii) kommenden Suspension auf eine Temperatur im Bereich von 130°C bis 170°C für eine Zeit von 60 bis 300 Minuten;
v) Filtrieren der so erhaltenen Lösung und Waschen des Rückstandes mit geschmolzenem DMSO₂ zur Entfernung und Rückgewinnung des Harnstoffs, der nicht reagiert hat;
vi) Entfernen des restlichen Lösungsmittels.

4. Verfahren nach einem der vorhergehenden Ansprüche, wobei in Schritt iv) der als Reaktionsnebenprodukt entstehende Ammoniak entfernt wird.

5. Verfahren nach einem der vorhergehenden Ansprüche, wobei während Schritt vi) die auf der Zellulose verbliebenden Lösungsmittelrückstände durch Waschen oder durch Sublimation des DMSO₂-Lösungsmittels entfernt werden.

6. Verfahren nach einem der vorhergehenden Ansprüche, wobei das DMSO₂/Wasser-Gemisch DMSO₂ und Wasser in einem Verhältnis von 5 bis 40 Gew.-% Wasser umfasst.

7. Verfahren nach einem der vorhergehenden Ansprüche, wobei die Zellulose einen Polymerisationsgrad im Bereich von DP 200 bis DP 700 aufweist.

8. Verfahren nach einem der vorhergehenden Ansprüche, wobei die Konzentration von Harnstoff in dem Lösungsmittel im Bereich von 5 bis 40 Gew.-%, bezogen auf das Gesamtgewicht der Lösung, liegt.

9. Verfahren nach einem der vorhergehenden Ansprüche, wobei das Gewichtsverhältnis von Lösung/Zellulose in Schritt ii) im Bereich von 5 bis 20 liegt.

## Revendications

1. Procédé pour la préparation de carbamate de cellulose dans lequel la réaction entre urée et cellulose est effectuée dans un solvant sélectionné parmi diméthylsulfone fondue et un mélange de diméthylsulfone et eau.

2. Procédé selon la revendication 1, qui comprend ou consiste en les étapes suivantes :
i) préparer une solution d'urée en DMSO₂ fondue (diméthylsulfone ou méthyl-sulfonyl-méthane) ;
ii) disperser la cellulose dans la solution d'urée/DMSO₂ fondue (point de fusion 109 °C) ;
iii) maintenir la suspension ainsi obtenue sous agitation à une température de 109-112 °C pour un temps allant de 5 à 60 minutes ;
iv) réchauffer la suspension à une température allant de 130 à 170 °C, pour un temps allant de 60 à 300 minutes ;
v) filtrer la solution ainsi obtenue et laver le résidu avec DMSO₂ fondue pour éliminer et récupérer l'urée n'ayant pas réagi ;
vi) éliminer le solvant résiduel.

3. Procédé selon la revendication 1, qui comprend ou consiste en les étapes suivantes :
i) préparer une solution d'urée dans un mélange de DMSO₂/eau ;
ii) disperser la cellulose dans la solution d'urée/DMSO₂/eau ;
iii) maintenir la suspension ainsi obtenue sous agitation pour une période de temps allant de 5 à 60 minutes à une température allant de 20 à 100 °C et réchauffer ensuite la suspension ainsi obtenue à une température allant de 100 à 120 °C, pour un temps suffisant pour l'élimination complète de l'eau présente dans le mélange ;
iv) réchauffer la suspension venant de l'étape iii) à une température allant de 130°C à 170 °C, pour un temps allant de 60 à 300 minutes ;
v) filtrer la solution ainsi obtenue et laver le résidu avec DMSO₂ fondue pour éliminer et récupérer l'urée n'ayant pas réagi ;
vi) éliminer le solvant résiduel.

4. Procédé selon l'une quelconque des revendications précédentes, dans lequel pendant l'étape iv), l'ammoniac qui est formé comme sous-produit de réaction est éliminé.

5. Procédé selon l'une quelconque des revendications précédentes, dans lequel pendant l'étape vi) le solvant résiduel restant sur la cellulose est éliminé par lavage ou par sublimation du solvant de DMSO₂.

6. Procédé selon l'une quelconque des revendications précédentes, dans lequel le mélange de DMSO₂/eau comprend DMSO₂ et eau dans un rapport allant de 5 à 40 % en poids d'eau.

7. Procédé selon l'une quelconque des revendications précédentes, dans lequel la cellulose a un degré de polymérisation allant de DP 200 à DP700.

8. Procédé selon l'une quelconque des revendications précédentes, dans lequel la concentration d'urée dans le solvant va de 5 à 40 % en poids par rapport au poids total de la solution.

9. Procédé selon l'une quelconque des revendications précédentes, dans lequel le rapport pondéral à l'étape ii) va de 5 à 20.
